# EUROPÄISCHE PATENTSCHRIFT

(11) **EP 2 477 778 B1**
(45) Veröffentlichungstag und Bekanntmachung des Hinweises auf die Patenterteilung: **17.04.2019**
(21) Anmeldenummer: 10752813.5
(22) Anmeldetag: 14.09.2010
(51) Int. Cl.: B23D 77/00, B23B 31/11, B23B 31/00

(54) **REIBWERKZEUG ZUR SPANENDEN BEARBEITUNG EINES WERKSTÜCKS UND WECHSELKOPF FÜR EIN SOLCHES REIBWERKZEUG**
REAMING TOOL FOR MACHINING A WORKPIECE AND EXCHANGEABLE CUTTING HEAD FOR THE SAME
ALÉSOIR POUR L'USINAGE D'UNE PIÈCE ET TÊTE INTERCHANGEABLE POUR UN TEL ALÉSOIR

(30) Priorität: 16.09.2009 DE 102009042395
(43) Veröffentlichungstag der Anmeldung: 25.07.2012
(73) Patentinhaber: Hartmetall-Werkzeugfabrik Paul Horn GmbH, 72072 Tübingen (DE)
(72) Erfinder: OETTLE, Matthias, 72585 Riederich (DE)
(74) Vertreter: Witte, Weller & Partner Patentanwälte mbB
(86) Internationale Anmeldenummer: PCT/EP2010/063418
(87) Internationale Veröffentlichungsnummer: WO 2011/032921

(56) Entgegenhaltungen:
- EP-A1- 1 529 587
- WO-A1-2007/096861
- WO-A2-92/06817
- WO-A2-2009/059576
- CH-A- 482 486
- DE-U1-202005 007 945
- JP-A- 2000 288 821
- US-A- 2 936 659

## Beschreibung

Die vorliegende Erfindung betrifft ein Reibwerkzeug zur spanenden Bearbeitung eines Werkstücks sowie einen Wechselkopf für ein solches Reibwerkzeug.

Reibwerkzeuge werden zur Feinbearbeitung von zylindrischen Bohrungen verwendet. Ein solches Reibwerkzeug ist beispielsweise in der EP 1 529 587 A1 beschrieben. Dieses Reibwerkzeug weist einen Schaft und einen auswechselbaren, einstückigen Wechselkopf auf, wobei der Wechselkopf eine in einer planen schaftseitigen Stirnfläche eines Verbindungselements ausgebildete Aussparung zur zentrierenden Befestigung des Wechselkopfes auf dem Schaft aufweist. Der Schaft weist an einer stirnseitigen Planfläche einen in axialer Richtung aus dieser Planfläche hervortretenden Verbindungsansatz auf, welcher mit der Aussparung des Wechselkopfs korrespondiert. Am Wechselkopf bildet die als Verbindungselement ausgebildete Aussparung einen achszentralen Innenkonus zur Zentrierung des Wechselkopfes auf dem Schaft, und am Schaft ist der Verbindungsansatz ein korrespondierender Außenkonus. Der Wechselkopf weist ferner eine zentrische Bohrung auf, durch die der Wechselkopf mittels einer Schraube am Schaft befestigt wird.

Die WO2007/096861 A1 offenbart ein Reibwerkzeug mit den Merkmalen des Oberbegriffs des unabhängigen Anspruchs 1 sowie einen Wechselkopf mit den Merkmalen des Oberbegriffs des unabhängigen Anspruchs 10. Die CH 482 486 A zeigt eine weitere Präzisionsreibahle mit einem Reibahlenschaft und einem eine Mehrzahl von Schneiden aufweisenden Reibahlenkopf an ihrem vorderen Ende. Ein weiteres Schaftwerkzeug, welches als Stufenreibahle ausgebildet ist, mit einstellbarem Schneiddurchmesser ist aus der WO 2009/059576 A2 bekannt. Weitere Werkzeuge ähnlicher Art sind in der JP 2000 288821 A und der DE 20 2005 007 945 U1 offenbart.

Der vorliegenden Erfindung liegt die Aufgabe zugrunde, eine alternative Ausgestaltung eines Reibwerkzeugs zur spanenden Bearbeitung eines Werkstücks sowie einen alternativen Wechselkopf für ein solches Reibwerkzeug anzugeben.

Ein erster Aspekt der vorliegenden Erfindung betrifft ein Reibwerkzeug zur spanenden Bearbeitung eines Werkstücks mit:
- einem Halter mit einer stirnseitig angeordneten Aufnahmeöffnung mit einem Innengewinde und einer im Halter in dessen Längsrichtung verlaufenden, in die Aufnahmeöffnung mündenden Halterbohrung und
- einem Wechselkopf mit einem Schneidenelement mit mehreren in Umfangsrichtung verteilt angeordneten Schneiden, einem Wechselkopfschaft mit einem mit dem in der Aufnahmeöffnung des Halters angeordneten Innengewinde korrespondieren Außengewinde und einem zwischen dem Schneidenelement und dem Wechselkopfschaft angeordneten Anlageelement mit einer erste Anlagefläche zur Anlage an einer an der werkstückseitigen Stirnseite des Halters angeordneten ersten Abstützfläche,
wobei durch den gesamten Wechselkopf in dessen Längsrichtung eine mit der Halterbohrung korrespondierende Wechselkopfbohrung verläuft, welche zusammen mit der Halterbohrung zur Kühlmittelzufuhr durch den Halter und den Wechselkopf hin zu dem Schneidenelement dient,
wobei in der Wechselkopfbohrung im Bereich des werkstückseitigen Endes ein Werkzeugeingriff und ein Innengewinde zum Anschrauben eines Kühlmittelverteilerelements vorgesehen sind, und wobei das Innengewinde zwischen dem Werkzeugeingriff und dem werkstückseitigen Ende der Wechselkopfbohrung angeordnet ist.

Ein weiterer Aspekt der vorliegenden Erfindung betrifft einen Wechselkopf für ein solches Reibwerkzeug, wobei der Wechselkopf aufweist:
- ein Schneidenelement mit mehreren in Umfangsrichtung verteilt angeordneten Schneiden,
- einen Wechselkopfschaft mit einem mit dem in der Aufnahmeöffnung des Halters angeordneten Innengewinde korrespondieren Außengewinde,
- ein zwischen dem Schneidenelement und dem Wechselkopfschaft angeordneten Anlageelement mit einer ersten Anlagefläche zur Anlage an einer an der werkstückseitigen Stirnseite des Halters angeordneten ersten Abstützfläche und
- eine durch den gesamten Wechselkopf in dessen Längsrichtung verlaufende, mit der Halterbohrung korrespondierende Wechselkopfbohrung, welche zusammen mit der Halterbohrung zur Kühlmittelzufuhr durch den Halter und den Wechselkopf hin zu dem Schneidenelement dient,
wobei in der Wechselkopfbohrung im Bereich des werkstückseitigen Endes ein Werkzeugeingriff und ein Innengewinde zum Anschrauben eines Kühlmittelverteilerelements vorgesehen sind, und wobei das Innengewinde zwischen dem Werkzeugeingriff und dem werkstückseitigen Ende der Wechselkopfbohrung angeordnet ist.

Das erfindungsgemäße Reibwerkzeug weist grundsätzlich nur zwei Teile auf, nämlich den Halter und den Wechselkopf. Die Mittel zur Befestigung des Wechselkopfes an dem Halter sind unmittelbar am Wechselkopf selbst angebracht, so dass keine zusätzlichen (meist filigranen) Befestigungsmittel, wie etwa eine zusätzliche Schraube, erforderlich sind. Dadurch lässt sich der Wechselkopf einfacher und schneller austauschen, und die Gefahr des Verlustes eines Teils beim Austauschen ist geringer. Ferner lässt sich dadurch eine höhere Positioniergenauigkeit des Schneidelements gegenüber dem Halter erreichen, da zur Positionierung weniger Teile involviert sind.

In der Wechselkopfbohrung im Bereich des werkstückseitigen Endes ist ein Werkzeugeingriff vorgesehen. Beispielsweise kann dort ein Eingriff für einen Inbusschlüssel oder einen Torx-Schlüssel vorgesehen sein, mit dem von der Stirnseite her durch die Wechselkopfbohrung in den Werkzeugeingriff zum Verschrauben des Wechselkopfes mit dem Halter (bzw. zum Herausschrauben des Wechselkopfes) eingegriffen wird.

In der Wechselkopfbohrung im Bereich des werkstückseitigen Endes ist ein Innengewinde vorgesehen. Die Halterbohrung und die damit korrespondierende Wechselkopfbohrung dienen bevorzugt auch zur Kühlmittelzufuhr in den Bereich der Werkstückbearbeitung. Das im Bereich des werkstückseitigen Endes der Wechselkopfbohrung vorgesehene Innengewinde dient dann dazu, dort ein Kühlmittelverteilelement, insbesondere eine Kühlmittelverteilschraube aufzuschrauben.

Dieses Kühlmittelverteilelement weist bevorzugt einen Verteilerschaft mit dem in der Wechselkopfbohrung vorgesehenen Innengewinde korrespondierenden Außengewinde und eine erste in Längsrichtung des Verteilerschafts verlaufende Verteilerbohrung sowie einen Verteilerkopf mit von der erster Verteilerbohrung aus radial nach außen verlaufenden zweiten Verteilerbohrungen auf, so dass das Kühlmittel an der Stirnseite des Schneidenelements in radialer Richtung, also zu den Schneiden hin, verteilt wird. Dadurch lässt sich eine besonders gute Verteilung des Kühlmittels hin zu den Schneiden erreichen.

Da das Kühlmittelverteilelement über die Stirnfläche des Schneidenelements hinausragt, kann es bevorzugt bei der Bearbeitung von Durchgangsbohrungen und Sackbohrungen, sofern nicht bis zum Grund der Sackbohrung bearbeitet werden muss, eingesetzt werden. Sofern bis zum Grund der Sackbohrung bearbeitet werden soll, kann bei dieser Ausgestaltung das Kühlmittelverteilelement aber einfach abgeschraubt werden, wodurch dann die Kühlmittelzufuhr zu dem Schneidenelement nur durch die Halterbohrung und die Wechselkopfbohrung erfolgt.

Von der Stirnseite des Wechselkopfes aus gesehen, ist in der Wechselkopfbohrung zunächst das Innengewinde angeordnet und am Ende des Innengewindes, also weiter innen in der Wechselkopfbohrung liegend, ist der Werkzeugeingriff vorgesehen.

Bevorzugt ist der Verteilerschaft vollständig in die Wechselkopfbohrung einschraubbar, und der Verteilerkopf im Verhältnis zur Länge des Verteilerschafts flach ausgestaltet. Dadurch können auch Sackbohrungen möglichst weit bis zum Grund bearbeitet werden, ohne das Verteilelement abzunehmen.

Eine besonders gute zentrische Positionierung des Wechselkopfes gegenüber dem Halter und eine verbesserte Drehmomentmitnahme werden durch eine Kegelplananlage erreicht, bei der zwischen dem am halterseitigen Ende des Wechselkopfschaftes angeordneten Außengewinde und dem Anlageelement am Wechselkopfschaft eine kegelförmige zweite Anlagefläche vorgesehen ist und bei der in der Aufnahmeöffnung des Halters eine korrespondierende kegelförmige zweite Abstützfläche angeordnet ist.

Eine besonders hohe Steifigkeit und Positioniergenauigkeit lässt sich dadurch erreichen, dass der Wechselkopf einstückig ausgebildet ist und vollständig aus Hartmetall oder aus Stahl mit aufgebrachten, insbesondere aufgelöteten, Schneiden besteht. Alternativ ist aber auch denkbar, dass der Wechselkopf zweistückig ausgebildet ist, wobei der Wechselkopfschaft und das Anlageelement einstückig ausgebildet sind und aus Stahl bestehen und wobei das Schneidenelement vollständig aus Hartmetall oder aus Stahl mit aufgebrachten, insbesondere aufgelöteten, Schneiden besteht.

Bei letzterer Ausgestaltung ist ferner bevorzugt vorgesehen, dass das Schneidenelement fest mit dem Anlageelement verbunden ist, wobei das Anlageelement auf der dem Wechselkopfschaft gegenüberliegenden Seite einen Koppelansatz, insbesondere mit polygonalem Querschnitt, aufweist, wobei das Schneidenelement eine zentrische Bohrung mit einem mit dem Querschnitt des Koppelansatzes korrespondierenden Querschnitt aufweist und wobei das Schneidenelement mit der zentrischen Bohrung auf den Koppelansatz aufgesteckt, insbesondere aufgepresst, ist. Auch diese Ausgestaltung dient der Verbesserung der Steifigkeit und Positioniergenauigkeit.

Auch für den Halter sind unterschiedliche Ausgestaltungen denkbar. In einer Ausgestaltung ist der Halter einstückig ausgebildet und besteht vollständig aus Hartmetall oder Cermet. Alternativ ist der Halter zweistückig aus einem Halterschaft und einem am werkstückseitigen Ende stirnseitig am Halterschaft fest angeordneten Anlagering ausgebildet, wobei der Halterschaft aus Stahl und der Anlagering vollständig aus Hartmetall bestehen und wobei der Anlagering eine Durchgangsbohrung mit einer Abstützfläche zur Abstützung einer an dem Wechselkopfschaft angeordneten Anlagefläche aufweist. Die Wahl der konkreten Ausgestaltung des Halters richtet sich, ebenso wie die Wahl der konkreten Ausgestaltung des Wechselkopfes, nach der gewünschten Steifigkeit und Positioniergenauigkeit, ist aber letztendlich auch eine Kostenfrage.

Die Erfindung wird nachfolgend anhand von in den Zeichnungen dargestellten, die Erfindung aber nicht einschränkenden Ausführungsbeispielen näher erläutert. Es zeigen:
- Fig. 1: eine Explosionsdarstellung einer ersten Ausführungsform des erfindungsgemäßen Reibwerkzeugs,
- Fig. 2: eine perspektivische Darstellung der ersten Ausführungsform in zusammengesetztem Zustand,
- Fig. 3: eine Explosionsdarstellung einer Ausführungsform des erfindungsgemäßen Wechselkopfes,
- Fig. 4: eine Darstellung eines Kühlmittelverteilelements,
- Fig. 5: eine perspektivische Darstellung der ersten Ausführungsform des erfindungsgemäßen Reibwerkzeugs mit aufgeschraubtem Kühlmittelverteilelement,
- Fig. 6: jeweils eine Vorderansicht, Seitenansicht und Rückansicht des in Fig. 5 gezeigten Reibwerkzeugs,
- Fig. 7: eine Schnittdarstellung durch das in Fig. 5 gezeigte Reibwerkzeug und
- Fig. 8: eine Explosionsdarstellung einer zweiten Ausführungsform des erfindungsgemäßen Reibwerkzeugs mit Kühlmittelverteilerelement.

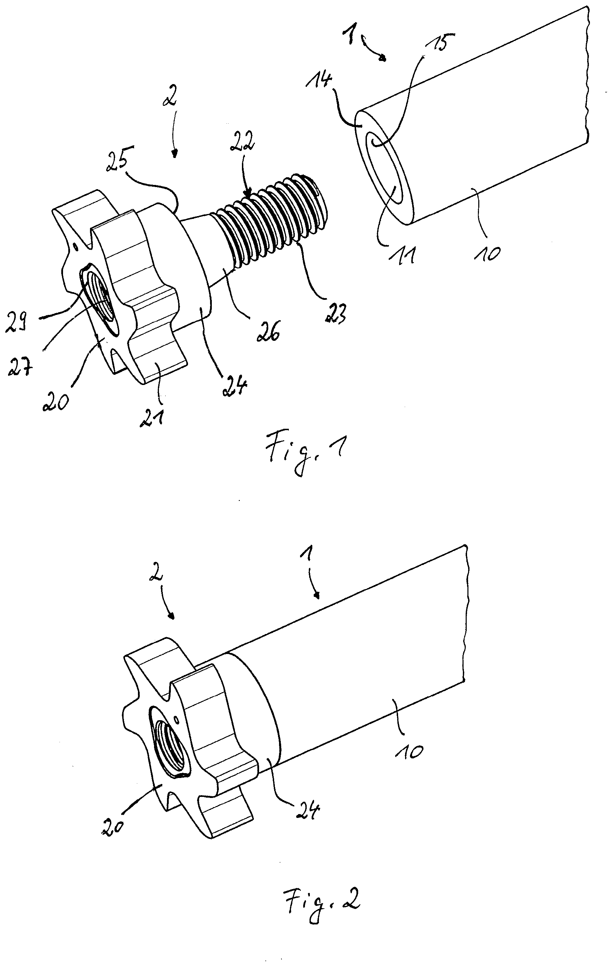

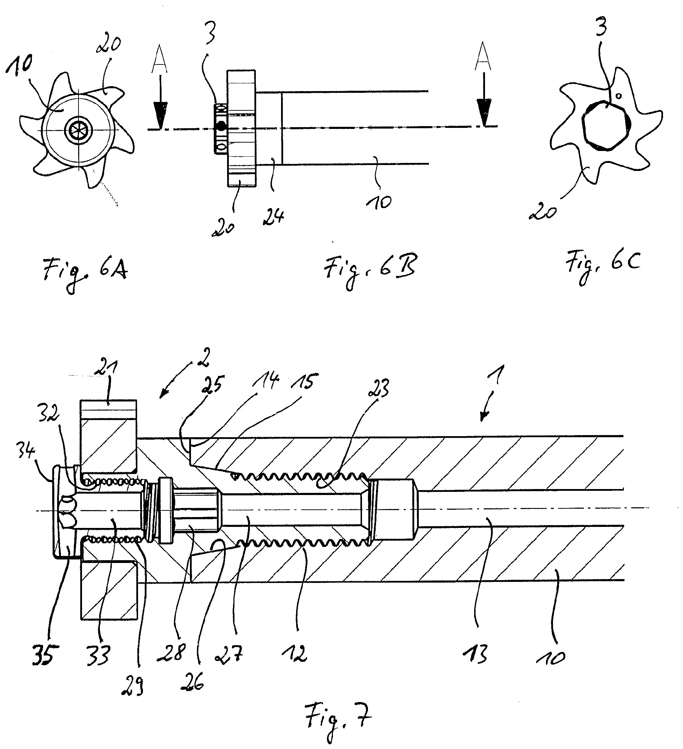

Fig. 1 zeigt eine Explosionsdarstellung einer ersten Ausführungsform eines erfindungsgemäßen Reibwerkzeugs umfassend einen Halter 1 und einen Wechselkopf 2. Der Halter 1 weist stirnseitig an dem dem Wechselkopf zugewandten Ende seines Schaftes 10 eine Aufnahmeöffnung 11 mit einem Innengewinde 12 (nicht sichtbar in Fig. 1; vgl. Fig. 7) sowie eine in Längsrichtung des Halters 1 verlaufende, in die Aufnahmeöffnung 11 mündende Halterbohrung 13 (vgl. Fig. 7) auf. Bei dieser Ausführungsform ist der Halter 1 einstückig ausgebildet und besteht vollständig aus Hartmetall, kann aber grundsätzlich auch aus Stahl bestehen.

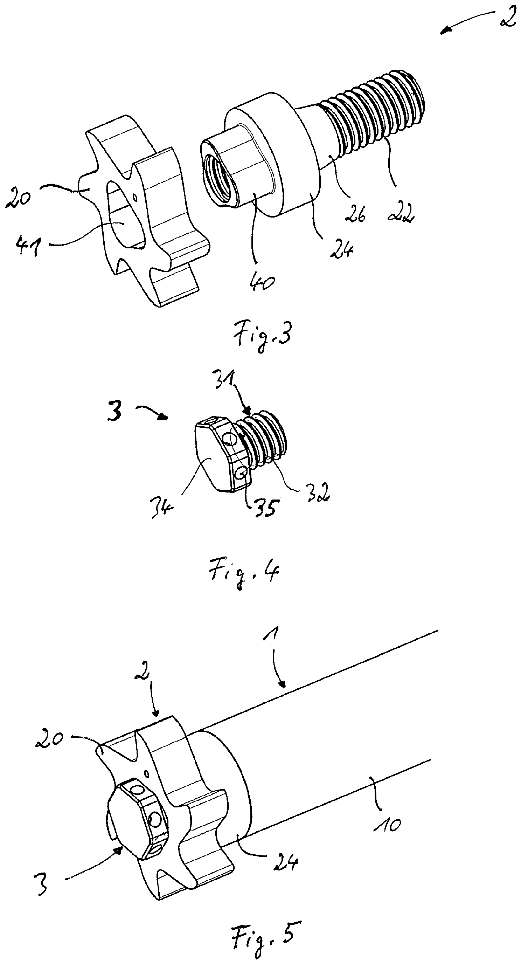

Der (auch in Fig. 3 gezeigte) Wechselkopf 2 weist ein Schneidenelement 20 mit mehreren in Umfangsrichtung verteilt angeordneten Schneiden 21, einen Wechselkopfschaft 22 mit einem mit dem in der Aufnahmeöffnung 11 des Halters 1 angeordneten Innengewinde 12 korrespondierenden Außengewinde 23 und ein zwischen dem Schneidenelement 20 und dem Wechselkopfschaft 22 angeordnetes Anlageelement 24 mit einer ersten Anlagefläche 25 zur Anlage an einer an der werkstückseitigen Stirnseite des Halters 1 angeordneten ersten Abstützfläche 14 auf. Zwischen dem Anlageelement 24 und dem Wechselkopfschaft 22 ist ferner eine zweite kegelförmige Anlagefläche 26 vorgesehen, die mit einer korrespondierenden kegelförmigen zweiten Abstützfläche 15 (vgl. Fig. 7) an der Innenfläche der Aufnahmeöffnung 11 des Halters 1 zusammenwirkt, so dass sich eine stabile und hochpräzise Kegelplananlage zwischen Wechselkopf 2 und Halter 1 ergibt, wenn der Wechselkopf 2, wie in Fig. 1 gezeigt ist, mit dem Halter 1 zur spanenden Bearbeitung eines Werkstücks verschraubt ist.

Durch den gesamten Wechselkopf 2 verläuft in dessen Längsrichtung eine mit der Halterbohrung 13 korrespondierende Wechselkopfbohrung 27 (vgl. insbesondere Fig. 7). Diese Wechselkopfbohrung 27 dient zusammen mit der Halterbohrung 13 zur Kühlmittelzufuhr durch den Halter 1 und den Wechselkopf 2 zum (nicht gezeigten) Werkstück bzw. dem Schneidelement 20. Bei der in Fig. 1 und 2 gezeigten Ausführungsform tritt das Kühlmittel dann am werkstückseitigen Ende des Schneidelements 20 aus der Wechselkopfbohrung 27 aus.

Im Bereich des werkstückseitigen Endes der Wechselkopfbohrung 27 ist ein Werkstückeingriff 28 (vgl. insbesondere Fig. 7) vorgesehen, der beispielsweise zum Eingriff eines Inbusschlüssels oder eines Torx-Schlüssels ausgestaltet sein kann, mit Hilfe dessen der Wechselkopf 2 mit dem Halter 1 verschraubt bzw. von diesem gelöst werden kann. Dieser Werkzeugeingriff 28 ist nicht direkt am werkstückseitigen Ende der Wechselkopfbohrung 27 angeordnet, sondern ist etwas innenliegend angeordnet, beispielsweise - wie in Fig. 7 gezeigt - im Bereich des Anlageelements 24 und der zweiten Anlagefläche 26. Zwischen diesem Werkzeugeingriff 28 und dem werkstückseitigen Ende der Wechselkopfbohrung 27 ist ferner ein Innengewinde 29 in der Wechselkopfbohrung 27 vorgesehen, um dort ein Schraubelement zu schrauben.

In dieses Innengewinde 29 kann ein in Fig. 4 gezeigtes Kühlmittelverteilelement 3 eingeschraubt werden. Das Kühlmittelverteilelement 3 weist dazu einen Verteilerschaft 31 auf, an dem ein Außengewinde 32 angebracht ist, welches mit dem in der Wechselkopfbohrung 27 vorgesehenen Innengewinde 29 korrespondiert. In dem Verteilerschaft 31 verläuft eine erste Verteilerbohrung 33 (vgl. Fig. 7), die mit der Wechselkopfbohrung 27 korrespondiert, aber zum werkstückseitigen Ende des Verteilerelements geschlossen ist. Dort ist ein Verteilerkopf 34 angebracht, in dem von der ersten Verteilerbohrung 33 aus radial nach außen verlaufende zweite Verteilerbohrungen 35 zur radialen Verteilung des Kühlmittels angebracht sind.

Zur Feinbearbeitung von Sackbohrungen wird das erfindungsgemäße Reibwerkzeug bevorzugt ohne das Kühlmittelverteilelement 3 verwendet, also in der in Fig. 2 gezeigten Ausgestaltung. Mit dieser Ausgestaltung kann die Feinbearbeitung somit bis zum Grund der Sackbohrung erfolgen. Wenn dies nicht erforderlich ist, oder bei Bearbeitung von Durchgangsbohrungen wird das erfindungsgemäße Reibwerkzeug bevorzugt mit aufgeschraubtem Kühlmittelverteilelement 3 benutzt, also in der in Fig. 5 gezeigten Ausgestaltung, mit der eine verbesserte Kühlmittelverteilung, und damit bessere Kühlung sowie Beseitigung von Spänen aus dem Bearbeitungsbereich erreicht werden kann.

Das Kühlmittelverteilelement 3 lässt sich grundsätzlich von Hand auf- und abschrauben. Zur sicheren Befestigung des Kühlmittelverteilelements 3 an dem Wechselkopf 2 ist bevorzugt vorgesehen, wie in den Fig. 4 und 5 erkennbar ist, dass der Verteilerkopf so ausgestaltet ist, dass er mit Hilfe eines Werkzeugs auf- und abgeschraubt werden kann. Vorliegend ist dazu der Verteilerkopf 34 als Sechskant ausgestaltet.

Wie aus Fig. 4 ferner erkennbar ist, ist der Verteilerkopf 34, im Vergleich zu dem Verteilerschaft 31, in Längsrichtung gesehen relativ flach ausgebildet, beispielsweise um den Faktor 2 bis 10 kleiner in Längsrichtung, damit auch bei auf den Wechselkopf 2 aufgeschraubtem Kühlmittelverteilelement 3 möglichst tief in Sackbohrungen Bearbeitungen durchgeführt werden können.

Der Wechselkopf 2 kann grundsätzlich, ebenso wie der Halter 1, einstückig ausgebildet sein und vollständig aus Hartmetall bestehen. Kostengünstig ist aber eine Lösung, bei der nur das Schneidenelement 20 aus Hartmetall besteht, während der Wechselkopfschaft 22 und das Anlageelement 24 aus Stahl bestehen, die dann wiederum einstückig ausgebildet sind. Eine solche Ausgestaltung ist als Explosionsdarstellung in Fig. 3 gezeigt. Zur Verkopplung des Schneidenelements 20 mit dem Anlageelement 24 und dem Wechselkopfschaft 22 ist an dem Anlageelement 24 auf der dem Wechselkopfschaft 22 gegenüberliegenden Seite ein Koppelansatz 40 vorgesehen, der einstückig mit dem Anlageelement 24 ausgebildet ist und in dem gezeigten Ausführungsbeispiel einen polygonalen, hier dreieckförmigen, Querschnitt aufweist. Das Schneidenelement 20 weist eine zentrische Bohrung 41 mit einem korrespondierenden Querschnitt auf, so dass zur Benutzung des Wechselkopfes 2 das Schneidenelement 20 auf den Koppelansatz 40 aufgesteckt, insbesondere maschinell aufgepresst, ist, so dass diese fest und nahezu untrennbar miteinander verbunden sind. Es versteht sich, dass auch andere Verbindungsarten denkbar sind, die eine ausreichende Steifigkeit, Positioniergenauigkeit und Kraftaufnahmefähigkeit aufweisen, hierzu eingesetzt werden können.

In Fig. 6 sind jeweils eine Rückansicht (Fig. 6A), Seitenansicht (Fig. 6B) und Vorderansicht (Fig. 6C) zur Verdeutlichung des Aufbaus der ersten Ausführungsform des erfindungsgemäßen Reibwerkzeugs gezeigt. Fig. 7 zeigt eine entsprechende Schnittdarstellung entlang der Schnittlinie A-A. Darin sind insbesondere die oben beschriebenen Gewinde, Bohrungen und Flächen erkennbar.

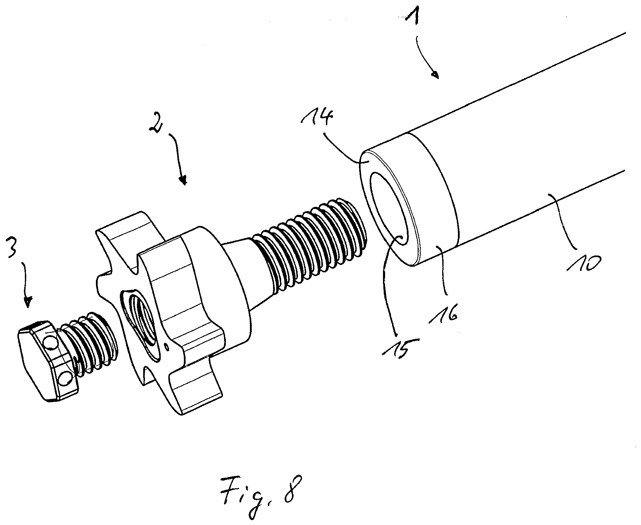

Fig. 8 zeigt eine Explosionsdarstellung einer zweiten Ausführungsform eines erfindungsgemäßen Reibwerkzeugs. Der wesentliche Unterschied gegenüber der ersten Ausführungsform besteht darin, dass der Halter 1 zweiteilig ausgestaltet ist, nämlich aus einem Halterschaft 10 und einem Anlagering 16. Der Halterschaft 10 ist dabei aus Stahl hergestellt, während nur der Anlagering 16 vollständig aus Hartmetall besteht, um die gewünschte Positioniergenauigkeit und Steifigkeit aufzunehmen. Der Anlagering 16 weist bei dieser Ausführungsform auch die erste Anlagefläche 14 und die zweite Anlagefläche 15 auf, die zur Erzielung der gewünschten Kegelplananlage zwischen Halter 1 und Wechselkopf 2 erforderlich sind und die die gewünschte Steifigkeit und Positioniergenauigkeit gewährleisten. Ansonsten gilt das oben in Bezug auf die erste Ausführungsform Gesagte analog, so dass auf weitere Ausführungen an dieser Stelle verzichtet wird.

Die Erfindung stellt ein einfach herzustellendes und leicht zu bedienendes Werkzeug dar, mit dem sich insbesondere Feinbearbeitungen von Innenbohrungen vornehmen lassen können. Mit nur wenigen Bauteilen lässt sich eine flexible Bearbeitung von sowohl Sackbohrungen als auch Durchgangsbohrungen erreichen, wobei eine hohe Positioniergenauigkeit und Steifigkeit gewährleistet ist.

## Patentansprüche

1. Reibwerkzeug zur spanenden Bearbeitung eines Werkstücks mit:
- einem Halter (1) mit einer stirnseitig angeordneten Aufnahmeöffnung (11) mit einem Innengewinde (12) und einer im Halter (1) in dessen Längsrichtung verlaufenden, in die Aufnahmeöffnung (11) mündenden Halterbohrung (13) und
- einem Wechselkopf (2) mit einem Schneidenelement (20) mit mehreren in Umfangsrichtung verteilt angeordneten Schneiden (21), einem Wechselkopfschaft (22) mit einem mit dem in der Aufnahmeöffnung (11) des Halters (1) angeordneten Innengewinde (12) korrespondieren Außengewinde (23) und einem zwischen dem Schneidenelement (20) und dem Wechselkopfschaft (22) angeordneten Anlageelement (24) mit einer ersten Anlagefläche (25) zur Anlage an einer an der werkstückseitigen Stirnseite des Halters (1) angeordneten ersten Abstützfläche (14),
wobei durch den gesamten Wechselkopf (2) in dessen Längsrichtung eine mit der Halterbohrung (13) korrespondierende Wechselkopfbohrung (27) verläuft, welche zusammen mit der Halterbohrung (13) zur Kühlmittelzufuhr durch den Halter (1) und den Wechselkopf (2) hin zu dem Schneidenelement (20) dient,
**dadurch gekennzeichnet, dass** in der Wechselkopfbohrung (27) im Bereich des werkstückseitigen Endes ein Werkzeugeingriff (28) und ein Innengewinde (29) zum Anschrauben eines Kühlmittelverteilerelements (3) vorgesehen sind, und dass das Innengewinde (29) zwischen dem Werkzeugeingriff (28) und dem werkstückseitigen Ende der Wechselkopfbohrung (27) angeordnet ist.

2. Reibwerkzeug gemäß Anspruch 1, **gekennzeichnet durch** das Kühlmittelverteilelement (3), insbesondere eine Kühlmittelverteilschraube, mit einem Verteilerschaft (31) mit einem mit dem in der Wechselkopfbohrung (27) vorgesehenen Innengewinde (29) korrespondierenden Außengewinde (32) und einer ersten in Längsrichtung des Verteilerschafts (31) verlaufenden ersten Verteilerbohrung (33) und mit einem Verteilerkopf (34) mit von der ersten Verteilerbohrung (33) aus radial nach außen verlaufenden zweiten Verteilerbohrungen (35).

3. Reibwerkzeug gemäß Anspruch 2, **dadurch gekennzeichnet, dass** der Verteilerschaft (31) vollständig in die Wechselkopfbohrung (27) einschraubbar ist und dass der Verteilerkopf (34) im Verhältnis zur Länge des Verteilerschafts (31) flach ausgestaltet ist.

4. Reibwerkzeug gemäß einem der vorstehenden Ansprüche, **dadurch gekennzeichnet, dass** zwischen dem am halterseitigen Ende des Wechselkopfschaftes (22) angeordneten Außengewinde (23) und dem Anlageelement (24) am Wechselkopfschaft (22) eine kegelförmige zweite Anlagefläche (26) vorgesehen ist und dass in der Aufnahmeöffnung (11) des Halters (1) eine korrespondierende kegelförmige zweite Abstützfläche (15) angeordnet ist.

5. Reibwerkzeug gemäß einem der vorstehenden Ansprüche, **dadurch gekennzeichnet, dass** der Wechselkopf (2) einstückig ausgebildet ist und vollständig aus Hartmetall oder aus Stahl mit aufgebrachten, insbesondere aufgelöteten, Schneiden (21) besteht.

6. Reibwerkzeug gemäß einem der Ansprüche 1 bis 4, **dadurch gekennzeichnet, dass** der Wechselkopf (2) zweistückig ausgebildet ist, wobei der Wechselkopfschaft (22) und das Anlageelement (24) einstückig ausgebildet sind und aus Stahl bestehen und wobei das Schneidenelement (20) vollständig aus Hartmetall oder aus Stahl mit aufgebrachten, insbesondere aufgelöteten, Schneiden (21) besteht.

7. Reibwerkzeug gemäß Anspruch 6, **dadurch gekennzeichnet, dass** das Schneidenelement (20) fest mit dem Anlageelement (24) verbunden ist, wobei das Anlageelement (24) auf der dem Wechselkopfschaft (22) gegenüber liegenden Seite einen Koppelansatz (40), insbesondere mit polygonalem Querschnitt, aufweist, wobei das Schneidenelement (20) eine zentrische Bohrung (41) mit einem mit dem Querschnitt des Koppelansatzes (40) korrespondieren Querschnitt aufweist und wobei das Schneidenelement (20) mit der zentrischen Bohrung (41) auf den Koppelansatz (40) aufgesteckt, insbesondere aufgepresst, ist.

8. Reibwerkzeug gemäß einem der vorstehenden Ansprüche, **dadurch gekennzeichnet, dass** der Halter (1) einstückig ausgebildet ist und vollständig aus Hartmetall oder Cermet besteht.

9. Reibwerkzeug gemäß einem der Ansprüche 1 bis 7, **dadurch gekennzeichnet, dass** der Halter (1) zweistückig aus einem Halterschaft (10) und einem am werkstückseitigen Ende stirnseitig am Halterschaft (10) fest angeordneten Anlagering (16) ausgebildet ist, wobei der Halterschaft (10) aus Stahl und der Anlagering (16) vollständig aus Hartmetall besteht, wobei der Anlagering (16) eine Durchgangsbohrung mit einer Abstützfläche (15) zur Abstützung einer an dem Wechselkopfschaft (22) angeordneten Anlagefläche (26) aufweist.

10. Wechselkopf für ein Reibwerkzeug, insbesondere nach einem der vorstehenden Ansprüche, zur spanenden Bearbeitung eines Werkstücks, wobei das Reibwerkzeug einen Halter (1) mit einer stirnseitig angeordneten Aufnahmeöffnung (11) mit einem Innengewinde (12) und einer im Halter (1) in dessen Längsrichtung verlaufenden, in die Aufnahmeöffnung (11) mündenden Halterbohrung (13) aufweist, wobei der Wechselkopf (2) aufweist:
- ein Schneidenelement (20) mit mehreren in Umfangsrichtung verteilt angeordneten Schneiden (21),
- einen Wechselkopfschaft (22) mit einem mit dem in der Aufnahmeöffnung (11) des Halters (1) angeordneten Innengewinde (12) korrespondieren Außengewinde (23),
- ein zwischen dem Schneidenelement (20) und dem Wechselkopfschaft (22) angeordneten Anlageelement (24) mit einer ersten Anlagefläche (25) zur Anlage an einer an der werkstückseitigen Stirnseite des Halters (1) angeordneten ersten Abstützfläche (14) und
- eine durch den gesamten Wechselkopf (2) in dessen Längsrichtung verlaufende, mit der Halterbohrung (13) korrespondierende Wechselkopfbohrung (27), welche zusammen mit der Halterbohrung (13) zur Kühlmittelzufuhr durch den Halter (1) und den Wechselkopf (2) hin zu dem Schneidenelement (20) dient,
**dadurch gekennzeichnet, dass** in der Wechselkopfbohrung (27) im Bereich des werkstückseitigen Endes ein Werkzeugeingriff (28) und ein Innengewinde (29) zum Anschrauben eines Kühlmittelverteilerelements (3) vorgesehen sind, und dass das Innengewinde (29) zwischen dem Werkzeugeingriff (28) und dem werkstückseitigen Ende der Wechselkopfbohrung (27) angeordnet ist.

## Claims

1. A reamer for machining a workpiece by chip removal, comprising:
- a holder (1), having a receiving opening (11) that is disposed on an end face and that has an internal thread (12), and having a holder bore (13) extending inside the holder (1) in the longitudinal direction thereof and opening into the receiving opening (11), and
- an exchangeable head (2), having a cutting element (20) that comprises a plurality of blades (21) disposed in a distributed manner in the circumferential direction, an exchangeable-head shank (22) that comprises an external thread (23) corresponding to the internal thread (12) disposed in the receiving opening (11) of the holder (1), and a bearing contact element (24) that is disposed between the cutting element (20) and the exchangeable-head shank (22) and that has a first bearing contact surface (25) for bearing contact on a first support surface (14) disposed on the workpiece-side end face of the holder (1),
wherein an exchangeable-head bore (27) corresponding to the holder bore (13) extends through the entire exchangeable head (2) in the longitudinal direction thereof, said exchangeable-head bore (27) serving, together with the holder bore (13), to deliver coolant, through the holder (1) and the exchangeable head (2), to the cutting element (20),
**characterized in that** a tool engagement means (28) and an internal thread (29) for fixing a coolant distributing element (3) are provided in the exchangeable-head bore (27), in the region of the workpiece-side end, and **in that** the internal thread (29) is arranged between the tool engagement means (28) and the workpiece-side end of the exchangeable head bore (27).

2. The reamer as claimed in claim 1, **characterized by** a coolant distributing element (3), in particular a coolant distributing screw, having a distributor shank (31) having an external thread (32) corresponding to the internal thread (29) provided in the exchangeable-head bore (27), and having a first distributor bore (33) extending in the longitudinal direction of the distributor shank (31), and having a distributor head (34) comprising second distributor bores (35) extending radially outward from the first distributor bore (33).

3. The reamer as claimed in claim 2, **characterized in that** the distributor shank (31) can be screwed fully into the exchangeable-head bore (27), and the distributor head (34) is of a flat design in comparison with the length of the distributor shank (31).

4. The reamer as claimed in any one of the preceding claims, **characterized in that** a conical, second bearing contact surface (26) is provided between the external thread (23), disposed on the holder-side end of the exchangeable-head shank (22), and the bearing contact element (24) on the exchangeable-head shank (22), and a corresponding conical, second support surface (15) is disposed in the receiving opening (11) of the holder (1).

5. The reamer as claimed in any one of the preceding claims, **characterized in that** the exchangeable head (2) is realized as a single piece and is composed entirely of hard metal or of steel with attached, in particular soldered-on, blades (21).

6. The reamer as claimed in any one of claims 1 to 4, **characterized in that** the exchangeable head (2) is realized as two pieces, wherein the exchangeable-head shank (22) and the bearing contact element (24) are realized as a single piece and are composed of steel, and wherein the cutting element (20) is composed entirely of hard metal or of steel with attached, in particular soldered-on, blades (21).

7. The reamer as claimed in claim 6, **characterized in that** the cutting element (20) is fixedly connected to the bearing contact element (24), wherein the bearing contact element (24) has a coupling projection (40), in particular having a polygonal cross section, on the side that is opposite the exchangeable-head shank (22), wherein the cutting element (20) has a central bore (41) having a cross section corresponding to the cross section of the coupling projection (40), and wherein the cutting element (20) is fitted onto, in particular pressed onto, the coupling projection (40) by means of the central bore (41).

8. The reamer as claimed in any one of the preceding claims, **characterized in that** the holder (1) is realized as a single piece and is composed entirely of hard metal or cermet.

9. The reamer as claimed in any one of claims 1 to 7, **characterized in that** the holder (1) is realized as two pieces, consisting of a holder shank (10) and of a bearing contact ring (16) disposed in a fixed manner on the end face of the holder shank (10), at the workpiece-side end, wherein the holder shank (10) is composed of steel and the bearing contact ring (16) is composed entirely of hard metal, and wherein the bearing contact ring (16) has a through bore having a support surface (15) for supporting a bearing contact surface (26) disposed on the exchangeable-head shank (22).

10. An exchangeable head for a reamer, in particular as claimed in any one of the preceding claims, for machining a workpiece by chip removal, wherein the reamer comprises a holder (1), having a receiving opening (11) that is disposed on an end face and that has an internal thread (12), and having a holder bore (13) extending inside the holder (1) in the longitudinal direction thereof and opening into the receiving opening (11), wherein the exchangeable head (2) comprises:
- a cutting element (20) that comprises a plurality of blades (21) disposed in a distributed manner in the circumferential direction,
- an exchangeable-head shank (22) that comprises an external thread (23) corresponding to the internal thread (12) disposed in the receiving opening (11) of the holder (1),
- a bearing contact element (24) that is disposed between the cutting element (20) and the exchangeable head shank (22) and that has a first bearing contact surface (25) for bearing contact on a first support surface (14) disposed on the workpiece-side end face of the holder (1), and
- an exchangeable-head bore (27) that extends through the entire exchangeable head (2) in the longitudinal direction thereof and that corresponds to the holder bore (13) said exchangeable-head bore (27) serving, together with the holder bore (13), to deliver coolant, through the holder (1) and the exchangeable head (2), to the cutting element (20),
**characterized in that** a tool engagement means (28) and an internal thread (29) for fixing a coolant distributing element (3) are provided in the exchangeable-head bore (27), in the region of the workpiece-side end, and **in that** the internal thread (29) is arranged between the tool engagement means (28) and the workpiece-side end of the exchangeable head bore (27).

## Revendications

1. Outil d'alésage destiné à l'usinage d'une pièce par enlèvement de copeaux, l'outil d'alésage comprenant :
- un support (1) comportant une ouverture de réception (11) disposée du côté frontal et pourvue d'un filetage intérieur (12) et d'un alésage de support (13) s'étendant dans le support (1) dans la direction longitudinale de celui-ci et débouchant dans l'ouverture de réception (11) et
- une tête remplaçable (2) comportant un élément de coupe (20) pourvu d'une pluralité d'arêtes de coupe (21) réparties circonférentiellement, une tige de tête remplaçable (22) pourvue d'un filetage extérieur (23) correspondant au filetage intérieur (12) disposé dans l'ouverture de réception (11) du support (1) et un élément d'appui (24) disposé entre l'élément de coupe (20) et la tige de tête remplaçable (22) et pourvu d'une première surface d'appui (25) destinée à venir en appui sur une première surface de support (14) disposée du côté frontal, côté pièce, du support (1),
un alésage de tête remplaçable (27) qui correspond à l'alésage de support (13) s'étendant à travers la totalité de la tête remplaçable (2) dans la direction longitudinale de celle-ci et qui sert conjointement avec l'alésage de support (13) à amener un fluide de refroidissement à travers le support (1) et la tête remplaçable (2) en direction du l'élément de coupe (20),
**caractérisé en ce qu'**un engagement d'outil (28) et un filetage intérieur (29) sont prévus dans l'alésage de tête remplaçable (27) dans la région de l'extrémité côté pièce pour visser un élément de distribution de fluide de refroidissement (3) et **en ce que** le filetage intérieur (29) est disposé entre l'engagement d'outil (28) et l'extrémité côté pièce de l'alésage de tête remplaçable (27).

2. Outil d'alésage selon la revendication 1, **caractérisé par** l'élément de distribution de fluide de refroidissement (3), en particulier une vis de distribution de fluide de refroidissement, comprenant une tige de distribution (31) pourvue d'un filetage extérieur (32) correspondant au filetage intérieur (29) prévu dans l'alésage de tête remplaçable (27), un premier alésage de distributeur (33) s'étendant dans la direction longitudinale de la tige de distribution (31) et une tête de distribution (34) pourvue de deuxièmes alésages de distribution (35) depuis le premier alésage de distribution (33) radialement vers l'extérieur.

3. Outil d'alésage selon la revendication 2, **caractérisé en ce que** la tige de distribution (31) peut être complètement vissée dans l'alésage de tête remplaçable (27) et **en ce que** la tête de distribution (34) est de forme plate par rapport à la longueur de l'arbre de distribution (31).

4. Outil d'alésage selon l'une des revendications précédentes, **caractérisé en ce qu'**une deuxième surface d'appui conique (26) est prévue entre le filetage extérieur (23), disposé à l'extrémité côté support de la tige de tête remplaçable (22), et l'élément d'appui (24) au niveau de la tige de tête remplaçable (22) et **en ce qu'**une deuxième surface de support conique (15) correspondante est disposée dans l'ouverture de réception (11) du support (1).

5. Outil d'alésage selon l'une des revendications précédentes, **caractérisé en ce que** la tête remplaçable (2) est conçue d'une seule pièce et est entièrement en métal dur ou en acier avec des arêtes de coupe (21) montées, notamment soudées.

6. Outil d'alésage selon l'une des revendications 1 à 4, **caractérisé en ce que** la tête remplaçable (2) est formée de deux pièces, la tige de tête remplaçable (22) et l'élément d'appui (24) étant formés d'une seule pièce et en acier et l'élément de coupe (20) étant entièrement en métal dur ou en acier avec des arêtes de coupe (21) montées, notamment soudées.

7. Outil d'alésage selon la revendication 6, **caractérisé en ce que** l'élément de coupe (20) est relié de manière fixe à l'élément d'appui (24), l'élément d'appui (24) comportant du côté opposé de la tige de tête remplaçable (22) un téton d'accouplement (40), ayant en particulier une section transversale polygonale, l'élément de coupe (20) comportant un alésage central (41) dont la section transversale correspond à la section transversale du téton d'accouplement (40) et l'élément de coupe (20) pourvu de l'alésage central (41) étant placé, en particulier pressé, sur le téton d'accouplement (40).

8. Outil d'alésage selon l'une des revendications précédentes, **caractérisé en ce que** le support (1) est formé d'une seule pièce et est entièrement en métal dur ou en cermet.

9. Outil d'alésage selon l'une des revendications 1 à 7, **caractérisé en ce que** le support (1) est formé de deux pièces, à savoir une tige de support (10) et une bague d'appui (16) disposée d'une manière fixe du côté frontal sur la tige de support (10) à l'extrémité côté pièce, la tige de support (10) étant en acier et la bague d'appui (16) étant entièrement en métal dur, la bague d'appui (16) comportant un alésage traversant pourvue d'une surface de support (15) destinée à supporter une surface d'appui (26) disposée au niveau de la tige de tête remplaçable (22).

10. Tête remplaçable destinée à un outil d'alésage, en particulier selon l'une des revendications précédentes, pour usiner une pièce par enlèvement de copeaux, l'outil d'alésage comportant un support (1) comportant une ouverture de réception (11) disposée du côté frontal et pourvue d'un filetage intérieur (12) et d'un alésage de support (13) s'étendant dans le support (1) dans la direction longitudinale de celui-ci et débouchant dans l'ouverture de réception (11), la tête remplaçable (2) comprenant :
- un élément de coupe (20) pourvu d'une pluralité d'arêtes de coupe (21) réparties circonférentiellement,
- une tige de tête remplaçable (22) pourvue d'un filetage extérieur (23) correspondant au filetage intérieur (12) disposé dans l'ouverture de réception (11) du support (1),
- un élément d'appui (24) disposé entre l'élément de coupe (20) et la tige de tête remplaçable (22) et pourvu d'une première surface d'appui (25) destinée à venir en appui sur une première surface de support (14) disposée du côté frontal, côté pièce, du support (1),
- un alésage de tête remplaçable (27) qui correspond à l'alésage de support (13), qui s'étend à travers la totalité de la tête remplaçable (2) dans la direction longitudinale de celle-ci et qui sert conjointement avec l'alésage de support (13) à amener un fluide de refroidissement à travers le support (1) et la tête remplaçable (2) en direction de l'élément de coupe (20),
**caractérisée en ce qu'**un engagement d'outil (28) et un filetage intérieur (29) sont prévus dans l'alésage de tête remplaçable (27) dans la région de l'extrémité côté pièce pour visser un élément de distribution de fluide de refroidissement (3) et **en ce que** le filetage intérieur (29) est disposé entre l'engagement d'outil (28) et l'extrémité côté pièce de l'alésage de tête remplaçable (27).
